Europäisches Patentamt

European Patent Office

Office européen des brevets

(11) Veröffentlichungsnummer: **0 547 060 B1**

(12) **EUROPÄISCHE PATENTSCHRIFT**

(45) Veröffentlichungstag der Patentschrift: **28.12.94**

(21) Anmeldenummer: **91913005.4**

(22) Anmeldetag: **31.07.91**

(86) Internationale Anmeldenummer:
**PCT/DE91/00614**

(87) Internationale Veröffentlichungsnummer:
**WO 92/04134 (19.03.92 92/07)**

(51) Int. Cl.⁵: **B06B 1/06**

(54) **ULTRASCHALLWANDLER FÜR DIE LAUFZEITMESSUNG VON ULTRASCHALL-IMPULSEN IN EINEM GAS.**

(30) Priorität: **06.09.90 DE 4028315**

(43) Veröffentlichungstag der Anmeldung:
**23.06.93 Patentblatt 93/25**

(45) Bekanntmachung des Hinweises auf die
Patenterteilung:
**28.12.94 Patentblatt 94/52**

(84) Benannte Vertragsstaaten:
**AT CH DE FR GB IT LI NL**

(56) Entgegenhaltungen:
**EP-A- 0 130 709**
**EP-A- 0 305 519**
**DE-A- 3 832 947**
**US-A- 3 362 501**
**US-A- 4 523 122**

(73) Patentinhaber: **SIEMENS AKTIENGESELL-
SCHAFT**
**Wittelsbacherplatz 2**
**D-80333 München (DE)**

(72) Erfinder: **MÖCKL, Thomas**
**Gustav-Freytag-Weg 11A**
**D-8630 Coburg (DE)**

## Beschreibung

Die Erfindung bezieht sich auf einen Ultraschallwandler für die Laufzeitmessung von Ultraschall-Impulsen in einem Gas, insbesondere für ein Gas-Durchflußmeßgerät. Die Erfindung läßt sich bevorzugt als Gaszähler zur Mengenmessung von Erdgas oder als Luftmengenmesser einsetzen. Solche Luftmengenmesser können beispielsweise in Verbindung mit Heizungsanlagen verwendet werden.

Ultraschallwandler mit einem piezoelektrischen Schwinger, insbesondere mit einer Piezokeramik, für die Laufzeitmessung von Ultraschall-Impulsen in einem Gas unterscheiden sich grundsätzlich von Ultraschallwandlern, bei denen die Ultraschall-Impulse in Wasser oder in das menschliche Gewebe eingekoppelt werden. Dies liegt an der unterschiedlichen Impedanz. Methan hat beispielsweise eine Impedanz von 260 kg/s$^2$m, während menschliches Gewebe eine Impedanz von 1,5 x 10$^6$ kg/s$^2$m besitzt. Zum Vergleich: Piezokeramik besitzt eine Impedanz von etwa 2,2 x 10$^7$ kg/s$^2$m. Um eine gute Transformation des im Ultraschallwandler üblicherweise verwendeten piezokeramischen Schwingers an das Gas zu erhalten, müssen also andere Gesichtspunkte beachtet werden als bei einer Transformation in Wasser oder Gewebe.

Bei einem Gas-Durchflußmeßgerät, das nach dem Prinzip der Laufzeitmessung von Ultraschall-Impulsen arbeitet, wird ein geeigneter Ultraschall- oder Impulswandler benötigt, der mit einem nadelförmigen Spannungsimpuls angeregt werden kann. Ein solcher nadelförmiger Spannungsimpuls kann beispielsweise durch eine Kondensatorentladung erzeugt werden. Nach Durchlaufen des zu messenden Gases sollte sodann zur Vermeidung von Interferenzen nur die Wellenfront - maximal die ersten drei Halbwellen - des auf eine Auswerteschaltung gelangenden Ultraschallimpulses ausgewertet werden.

Aus der DE-A-38 32 947 ist ein Ultraschallwandler für die Gasmessung bekannt, der als Schwinger eine beidseitig mit Elektroden versehene piezokeramische Scheibe verwendet. Diese Scheibe hat beispielsweise einen Durchmesser von 10 mm und eine Dicke von 1 mm. Als Anpassungsschicht an das zu messende Gas wird ein mit Hohlglaskugeln gefüllter Kunststoff verwendet. Diese Anpassungsschicht ist als topfförmiges Gehäuse ausgebildet, und die piezokeramische Scheibe ist auf die Innenseite des Topfes an dessen Boden geklebt. Bedeutsam ist hier, daß der Topfboden als λ/4-Transformationsschicht ausgebildet ist, die etwa auf die Grundresonanz (Planarschwingung) der piezokeramischen Scheibe abgestimmt ist. Die Grundresonanzfrequenz liegt dabei bei ca. 195 kHz. Um einen maximalen Energietransport der von einem solchen Ultraschallwandler erzeugten Ultraschallimpulse in das Gas zu ermöglichen, genügt es, ein Material geringer Dämpfung und hoher Festigkeit einzusetzen, dessen Impedanz $Z_M$ der Bedingung

$$Z_M = (Z_K \cdot Z_G)^{1/2} \qquad (1)$$

genügt, wobei $Z_K$ die Impedanz der piezokeramischen Scheibe und $Z_G$ die Impedanz des Gases ist. Eine solche Konstruktion hat den Nachteil, daß nur geringe Toleranzen bezüglich der Impedanz $Z_M$ des Materials und der Dicke $d_M$ der λ/4-Transformationsschicht zugelassen werden können. Dies schränkt einerseits die Materialauswahl ein, und andererseits muß bei der Herstellung der Anpassungsschicht mit hoher Präzision gearbeitet werden.

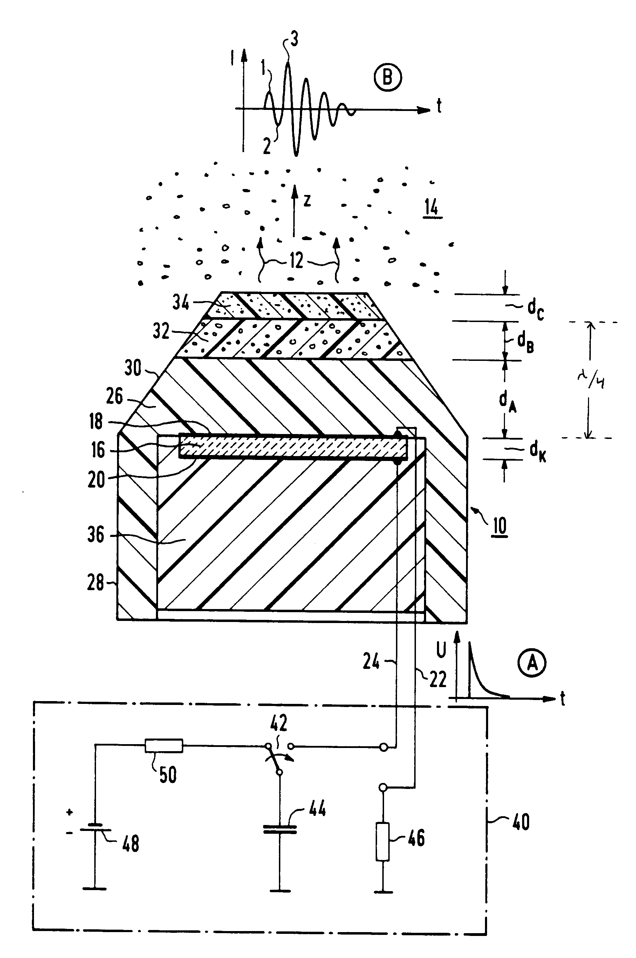

Aus der EP-C-0 119 855, insbesondere Figur 12, geht hervor, daß man bei einem Ultraschallwandler auch zwei übereinander angeordnete Anpassungsschichten unterschiedlicher akustischer Impedanz auf einem piezoelektrischen Dickenschwinger verwenden kann.

Dabei wird jedoch davon ausgegangen, daß beide Schichten als λ/4-Schichten ausgebildet sind, wodurch sie den oben geschilderten Toleranz-Anforderungen unterliegen.

Aus der DE-C-35 05 872 ist es bekannt, einen beidseitig mit Elektroden versehenen Ultraschall-Schwinger in einem topfförmigen Gehäuse unterzubringen. Der als Abstrahlfläche wirkende Boden des Gehäuses besteht aus einem porösen Kunststoff, insbesondere aus einem Epoxidharz.

Aus der US-A-4 414 482 geht hervor, daß man einen Ultraschallwandler auch im nicht-resonanten Bereich anregen kann. Bei diesem Ultraschallwandler handelt es sich jedoch um ein Array, das ebenfalls auf dem medizinischen Gebiet zur Untersuchung menschlichen Gewebes eingesetzt wird.

Aufgabe der Erfindung ist es, einen Ultraschallwandler für die Laufzeitmessung von Ultraschall-Impulsen in einem Gas anzugeben, der nach einem nadelförmigen elektrischen Anregungsimpuls eine möglichst hohe Schall- oder Stoßwelle abgibt, wobei bei der Herstellung die Einhaltung von hohen Toleranzen nicht erforderlich sein soll.

Diese Aufgabe wird erfindungsgemäß durch einen Ultraschallwandler gelöst, der gekennzeichnet ist durch

a) einen piezoelektrischen Radialschwinger, vorzugsweise aus einer Piezokeramik, der beidseitig mit Elektroden versehen ist, an die eine nadelpulsförmige Spannung legbar ist,

b) eine auf der einen Seite des Radialschwingers angebrachte erste Anpassungsschicht, deren Dicke kleiner ist als ein Viertel einer wandlereigenen Wellenlänge,

c) eine auf der ersten Anpassungsschicht angebrachte zweite Anpassungsschicht, deren Dicke ebenfalls kleiner ist als ein Viertel der wandlereigenen Wellenlänge,

d) einen auf der anderen Seite des Radialschwingers angebrachten Dämpfungskörper und

e) Durchführung einer Dickenschwingung durch den Verbund aus dem Radialschwinger und den beiden Anpassungsschichten infolge einer Radial-Dicken-Kopplung, sobald die nadelförmige Spannung angelegt ist, wobei die genannte wandlereigene Wellenlänge diejenige Wellenlänge ist, die sich infolge Eigenresonanz bei der Dickenschwingung ergibt.

Bei einem solchen Ultraschallwandler sind also die beiden Anpassungsschichten nicht als $\lambda/4$-Schichten ausgebildet. Daher ist auch nicht die Einhaltung von extremen Toleranzen erforderlich. Dies beruht auf der Erkenntnis, daß eine nichtresonante Impedanzanpassung praktisch kaum einen Einfluß auf die ersten drei Halbwellen des infolge eines nadelförmigen Spannungsimpulses ausgesandten Ultraschallimpulses besitzt.

Bevorzugt ist die erste Anpassungsschicht in Form eines Topfes ausgebildet, wobei der Radialschwinger am Boden des Topfes angeordnet ist. Der Topf wird bevorzugt mit dem Dämpfungskörper angefüllt. Dadurch ist gewährleistet, daß der Radialschwinger nach dem Anregen ohne übermäßiges Nachschwingen in den Ruhezustand übergehen kann.

Zum Anlegen der nadelpulsförmigen Spannung an die Elektroden ist bevorzugt eine elektrische Anregungsschaltung vorgesehen, die einen Kondensator enthält, der sich bei Einschaltung auf die Elektroden entlädt.

Weitere vorteilhafte Ausgestaltungen der Erfindung sind in den Unteransprüchen gekennzeichnet.

Ein Ausführungsbeispiel der Erfindung wird im folgenden anhand einer Figur näher erläutert.

In der Figur ist ein Ultraschallwandler 10 für die Laufzeitmessung von Ultraschall-Impulsen 12, die in Richtung z in ein Gas 14 eingestrahlt werden, dargestellt. Bei dem Gas 14 kann es sich insbesondere um ein Stadtgas oder um Erdgas, beispielsweise aber auch um Methan, handeln. Der Verlauf der Intensität I eines abgestrahlten Ultraschall-Impulses in Abhängigkeit von der Zeit t ist im Diagramm B dargestellt. Das an sich bekannte Meßprinzip wertet zur Vermeidung von Interferenzen maximal die ersten drei Halbwellen 1, 2 und 3 des dargestellten Ultraschall-Impulses I(t) aus.

Kernstück des Ultraschallwandlers 10 ist ein piezoelektrischer Schwinger 16, vorzugsweise aus einer Piezokeramik. Bei diesem Ultraschall-Schwinger 16 kann es sich insbesondere um eine piezokeramische Scheibe mit einem Durchmesser von 10 mm und einer Dicke von 1 mm handeln. Dieser Ultraschall-Schwinger 16 ist beidseitig mit metallischen Elektroden 18, 20 versehen, an die über Zuleitungen 22, 24 eine nadelpulsförmige Spannung U(t) gelegt werden kann. Der zeitliche Verlauf dieser Spannung U(t) ist im Diagramm A veranschaulicht. Bei dem Ultraschall-Schwinger 16 handelt es sich speziell um einen piezoelektrischen Radialschwinger, denn dieser wandelt die infolge des Anlegens der nadelförmigen Spannung U(t) erzeugte Radial-Schwingung infolge einer sogenannten Radial-Dicken-Kopplung in eine Schwingung in z-Richtung um.

Auf der oberen Seite des Radialschwingers 16 ist eine erste Anpassungsschicht 26 angebracht. Diese erste Anpassungsschicht 26 ist der Boden eines Topfes 28. In dessen Inneren ist symmetrisch der Radialschwinger 16 angeordnet. Der Topf 28 ist im Bereich seines Bodens außen abgeflacht oder mit einer konischen Abflachung oder Abschrägung 30 versehen. Die Dicke $d_A$ der ersten Anpassungsschicht 26 ist kleiner als ein Viertel einer wandlereigenen Wellenlänge $\lambda$. Speziell ist die Dicke $d_A$ gewählt zu

$$0{,}125\ \lambda \leq d_A < 0{,}2\ \lambda. \qquad (2)$$

Auf der ersten Anpassungsschicht 26 ist eine zweite Anpassungsschicht 32 aus einem anderen Material aufgebracht. Sie ist ebenfalls am Rande abgeschrägt. Die Dicke $d_B$ dieser zweiten Anpassungsschicht 32 ist ebenfalls kleiner als ein Viertel der genannten wandlereigenen Wellenlänge $\lambda$. Speziell kann auch hier gewählt sein:

$$0{,}125\ \lambda \leq d_B < 0{,}2\ \lambda. \qquad (3)$$

Und auf der zweiten Anpassungsschicht 32 kann noch eine dritte Anpassungsschicht 34 der Dicke $d_C$ aufgebracht sein. Die Aufgabe der Anpassungsschichten 26 und 32 sowie gegebenenfalls 34 ist es, die Impedanz $Z_K$ der piezokeramischen Scheibe 16 an die Impedanz $Z_G$ des Gases 14 anzupassen.

Wie erwähnt, sind die Dicken $d_A$, $d_B$ der Anpassungsschichten 26, 32 kleiner als ein Viertel der wandlereigenen Wellenlänge $\lambda$. Durch diese Dimensionierung nimmt man eine "Phasen-Fehlanpassung" in Kauf; dabei muß angemerkt werden, daß sich der Ausdruck "Fehlanpassung" hier nur auf den Fall der Resonanz bezieht. Es wurde nämlich erkannt, daß eine "resonante Impedanzanpassung" durch $\lambda/4$-Transformations- oder Anpassungsschichten nur dann sinnvoll ist, wenn der Ultraschallschwinger 10 voll einschwingen kann und so die durch Güte gewonnene Resonanzüberhöhung ausgenutzt wird. Vorliegend sind die Vorteile durch Resonanzüberhöhung unwirksam, da nur die Wellenfront des Ultraschall-Impulses ausgewertet wird. Im vorliegenden Fall, bei dem lediglich maximal die ersten drei Halbwellen 1, 2 und 3 zur Auswertung herangezogen werden, spielt also die "Fehlanpassung" bei der Energie-Auskopplung in das Gas 14 keine nennenswerte Rolle. In der Regel kommt man sogar mit nur zwei Wellenzügen aus. Bevorzugt können daher die Dicken $d_A$ und $d_B$ jeweils zwischen einem Achtel und einem Viertel der genannten wandlereigenen Wellenlänge $\lambda$ liegen, vergl. Gleichungen (2) und (3). Es hat sich dabei als vorteilhaft herausgestellt, daß die Summe dieser beiden Dicken, nämlich $d_A + d_B$, etwa ein Viertel der genannten Wellenlänge $\lambda$ sein sollte, d.h.

$$d_A + d_B \approx \lambda/4. \qquad (4)$$

Zieht man noch die Dicke $d_K$ der Piezokeramik 16 in Betracht, so ergibt sich ein vorteilhafte Ausgestaltung, wenn die Beziehung

$$d_A + d_B + d_K \approx \lambda/2 \qquad (5)$$

eingehalten wird.

Auf der unteren Seite des Radialschwingers 16 ist ein Dämpfungskörper oder Ultraschall-Sumpf 36 angeordnet. Dieser befindet sich innerhalb des Topfes 28. Das heißt, der Topf 28 ist fast vollständig mit dem Dämpfungskörper 36 ausgefüllt.

Sobald die nadelförmige Spannung U(t) gemäß Diagramm A an die Elektroden 18, 20 angelegt ist, führt der Verbund aus dem Radialschwinger 16 und den beiden Anpassungsschichten 26, 32 sowie gegebenenfalls der dritten Anpassungsschicht 34 infolge einer sogenannten Radial-Dicken-Kopplung eine Dickenschwingung in z-Richtung aus. Infolge der Eigenresonanz bei der Dickenschwingung ergibt sich eine Wellenlänge, die die obengenannte wandlereigene Wellenlänge $\lambda$ ist. Die Eigenresonanzfrequenz kann im Bereich von 200 kHz liegen.

Bei Zweifachanpassung mittels der beiden Schichten 26, 32 kann beispielsweise für den piezoelektrischen Radialschwinger 16, der bevorzugt aus Blei-Zirkonat-Titanat (PZT) bestehen kann, eine Impedanz $Z_K = 2 . 10^7$ kg/s$^2$m gewählt werden. Die Impedanz $Z_A$ der ersten Anpassungsschicht 26 kann dann beispielsweise 1,35 . $10^6$ kg/s$^2$m und die Impedanz $Z_B$ der zweiten Anpassungsschicht 32 kann 1,0 . $10^5$ kg/s$^2$m betragen. Die Impedanz $Z_G$ von Methan (Erdgas) beträgt beispielsweise $Z_G$ = 260 kg/s$^2$m.

Als erste Anpassungsschicht 26 kann beispielsweise eine Schicht aus Mikroglaskugeln in Epoxidharz vorgesehen sein. Und als zweite Anpassungsschicht 32 kann ein offenporiger Schaum, aber auch z.B. Styropor, verwendet werden. Materialien mit einer akustischen Impedanz $Z_B$ = 1 . $10^5$ kg/s$^2$m sind z.B. PU-Schäume oder Kork. Auch Schaumstoff aus dem Modellbau kann verwendet werden. Auch die dritte Anpassungsschicht 34 kann prinzipiell aus einem Styropor (Z = 4,43 . $10^3$ kg/s$^2$m) bestehen.

Für eine Dreifach-Anpassung mit drei Schichten 26, 32, 34 können beispielsweise folgende Werte gewählt werden:
$Z_A = 1,3 . 10^6$; $Z_B = 8 . 10^4$; $Z_C = 4,5 . 10^3$ kg/s$^2$m.

Eine andere Wertekombination wäre:
$Z_A = 2,5 . 10^6$; $Z_B = 1,25 . 10^6$; $Z_C = 1,0 . 10^5$ kg/s$^2$m.

Hierbei können die Werte $d_A$ = 2,3 mm, $d_B$ = 1,5 mm, $d_C$ = 1,0 mm für eine wandlereigene Frequenz $f = c/\lambda$ = 200 kHz gewählt werden.

Es ist festzuhalten, daß sowohl die Impedanzwerte Z als auch die Dicken d nicht genau vorher berechneten Werten entsprechen müssen, um eine gute Energieauskopplung zu erzielen. Erhebliche Toleranzen können zugelassen werden, so daß man in der Materialwahl, aber auch in der Fertigungsgenauigkeit weitgehend frei ist.

Zum Anlegen der nadelpulsförmigen Spannung U(t) an die Elektroden 18, 20 ist eine elektrische Anregungsschaltung 40 vorgesehen. Diese umfaßt als wesentliches Element einen Umschalter 42, mit dem die Entladung eines Kondensators 44 bewerkstelligt wird. Bei Umschaltung des Schalters 42 entlädt sich dieser Kondensator 44 auf die Elektroden 18, 20. Im Entladeweg ist ein Entladewiderstand 46, der auch durch die Leitungen 22, 24 gebildet werden kann, vorgesehen. Zum Aufladen des Kondensators 44 über den Umschalter 42 ist eine Ladeschaltung vorgesehen, die aus einer Gleichspannungsquelle 48, z.B. von 300 V, und einem Ladewiderstand 50 bestehen kann. Der Umschalter 42 kann - abweichend von der prinzipiellen Darstellung in der Figur - durch einen oder mehrere Thyristoren realisiert werden.

Nicht dargestellt ist eine (an sich bekannte) Auswerteschaltung. Diese ist so konzipiert, daß sie maximal die ersten drei Halbwellen 1, 2, 3, bevorzugt nur die ersten beiden Halbwellen 1 und 2, jedes der bei Erregung ausgelösten Ultraschallimpulse I(t) nach dessen Durchgang durch das Gas 14 auswertet. Aus der Laufzeit läßt sich die Menge des am Ultraschallwandler 10 vorbeiziehenden Gasstroms 14 bestimmen.

Der Vorteil des dargestellten Ultraschallwandlers besteht darin, daß er nach einem elektrischen Anregungsimpuls U(t) gemäß Diagramn B eine Schall- oder Stoßwelle hoher Intensität abgibt, ohne daß dazu eine besonders hohe Einhaltung von Toleranzen bezüglich der Werte d und Z erforderlich ist. Der Ultraschallwandler 10 geht nach Abgabe eines solchen Ultraschall-Impulses U(t) ohne allzu viel Nachschwingen infolge der Anordnung des Dämpfungskörpers 36 in den Ruhezustand über und steht sodann für die Abgabe eines neuen Ultraschall-Impulses U(t) bereit. Als weiterer Vorteil ist zu verzeichnen, daß das Gehäuse (Topf 28) nicht, wie eigentlich zu erwarten, aus einem sehr teuren Material wie z.B. Dosey, bestehen muß, sondern aus einem beliebigen Material angefertigt sein kann, da die besonderen Eigenschaften dieser mit Hohlglaskugeln gefüllten Hartschäume nur im (hier absichtlich vermiedenen) resonanten System zum Tragen kommen. Außerdem hat sich gezeigt, daß die "optimalen" akustischen Impedanzen nicht besonders genau eingehalten werden müssen, was die Auswahl der Werkstoffe erleichtert.

**Patentansprüche**

1. Ultraschallwandler für die Laufzeitmessung von Ultraschall-Impulsen in einem Gas, insbesondere für ein Gas-Durchflußmeßgerät, **gekennzeichnet durch**
   a) einen piezoelektrischen Radialschwinger (16), vorzugsweise aus einer Piezokeramik, der beidseitig mit Elektroden (18, 20) versehen ist, an die eine nadelpulsförmige Spannung (U(t)) legbar ist,
   b) eine auf der einen Seite des Radialschwingers (16) angebrachte erste Anpassungsschicht (26), deren Dicke ($d_A$) kleiner ist als ein Viertel einer wandlereigenen Wellenlänge ($\lambda$),
   c) eine auf der ersten Anpassungsschicht (26) angebrachte zweite Anpassungsschicht (32), deren Dicke ($d_B$) ebenfalls kleiner ist als ein Viertel der wandlereigenen Wellenlänge ($\lambda$),
   d) einen auf der anderen Seite des Radialschwingers (16) angebrachten Dämpfungskörper (36) und
   e) Durchführung einer Dickenschwingung durch den Verbund aus dem Radialschwinger (16) und den beiden Anpassungsschichten (26, 32) infolge einer Radial-Dicken-Kopplung, sobald die nadelförmige Spannung (U(t)) angelegt ist, wobei die genannte wandlereigene Wellenlänge ($\lambda$) diejenige Wellenlänge ist, die sich infolge Eigenresonanz bei der Dickenschwingung ergibt.

2. Ultraschallwandler nach Anspruch 1, **dadurch gekennzeichnet,** daß die erste Anpassungsschicht (26) in Form eines Topfes (28) ausgebildet ist, und daß der Radialschwinger (16) am Boden des Topfes (25) angeordnet ist.

3. Ultraschallwandler nach Anspruch 2, **dadurch gekennzeichnet,** daß der Topf (28) mit dem Dämpfungskörper (36) angefüllt ist.

4. Ultraschallwandler nach Anspruch 2 oder 3, **dadurch gekennzeichnet,** daß der Topf (28) im Bereich seines Bodens mit einer Abflachung (30) versehen ist.

5. Ultraschallwandler nach einem der Ansprüche 1 bis 4, **dadurch gekennzeichnet,** daß auf der zweiten Anpassungsschicht (32) eine dritte Anpassungsschicht (34) angeordnet ist.

6. Ultraschallwandler nach einem der Ansprüche 1 bis 5, **dadurch gekennzeichnet,** daß für die Dicke $d_A$ der ersten Anpassungsschicht (26)

$$\lambda/8 \leq d_A < \lambda/4$$

und daß für die Dicke $d_B$ der zweiten Anpassungsschicht (32)

$$\lambda/8 \leq d_B < \lambda/4$$

gewählt ist, wobei $\lambda$ die Wellenlänge der Dickenschwingung ist.

7. Ultraschallwandler nach Anspruch 6, **dadurch gekennzeichnet,** daß für die Dicke $d_A$ und $d_B$ der ersten bzw. zweiten Anpassungsschicht (26, 32)

$$d_A + d_B \approx \lambda/4$$

gilt.

8. Ultraschallwandler nach Anspruch 6 oder 7, **dadurch gekennzeichnet,** daß für die Dicke $d_A$ und $d_B$ der ersten bzw. zweiten Anpassungsschicht (26, 32) sowie für die Dicke $d_K$ des Radialschwingers (16)

$$d_A + d_B + d_K \approx \lambda/2$$

gilt.

9. Ultraschallwandler nach einem der Ansprüche 1 bis 8, **dadurch gekennzeichnet,** daß als erste Anpassungsschicht (26) eine Schicht von Mikroglaskugeln in Epoxidharz vorgesehen ist.

10. Ultraschallwandler nach einem der Ansprüche 1 bis 9, **dadurch gekennzeichnet,** daß als zweite Anpassungsschicht (32) ein offenporiger Schaum vorgesehen ist.

**11.** Ultraschallwanlder nach einem der Ansprüche 1 bis 10, **dadurch gekennzeichnet,** daß zum Anlegen der nadelpulsförmigen Spannung (U(t)) an die Elektroden (18, 20) eine elektrische Anregungsschaltung (40) vorgesehen ist, die einen Kondensator (44) enthält, der sich bei Einschaltung auf die Elektroden (18, 20) entlädt.

**12.** Ultraschallwandler nach einem der Ansprüche 1 bis 11, **dadurch gekennzeichnet,** daß eine Auswertungsschaltung vorgesehen ist, die maximal die ersten drei Halbwellen (1, 2, 3) jedes der bei Erregung ausgelösten Ultraschall-Impulse (I(t)) nach dessen Durchgang durch das Gas (14) auswertet.

**13.** Ultraschallwandler nach einem der Ansprüche 1 bis 12, **dadurch gekennzeichnet,** daß er für eine Frequenz von etwa 200 kHz ausgelegt ist.

## Claims

**1.** Ultrasonic transducer for measuring the propagation time of ultrasonic pulses in a gas, in particular for a gas flow-rate meter, **characterised by**
a) a piezoelectric radial oscillator (16), preferably made of a piezoceramic, that is provided on both sides with electrodes (18, 20) to which a spike voltage (U(t)) can be applied,
b) a first matching layer (26) applied to one of the sides of the radial oscillator (16), said first matching layer (26) having a thickness ($d_A$) that is less than a quarter of a characteristic wavelength ($\lambda$) of the transducer,
c) a second matching layer (32) applied to the first matching layer (26), the thickness ($d_B$) of said second matching layer (32) also being less than a quarter of the characteristic wavelength ($\lambda$) of the transducer,
d) a damping element (36) mounted on the other side of the radial oscillator (16) and
e) implementing a thickness-mode oscillation through the sandwich structure comprising the radial oscillator (16) and the two matching layers (26, 32) as a result of a radial-thickness coupling, as soon as the spike voltage (U(t)) is applied, the said characteristic wavelength ($\lambda$) of the transducer being that wavelength resulting from natural resonance during the thickness-mode oscillation.

**2.** Ultrasonic transducer according to Claim 1, **characterised in that** the first matching layer (26) is constructed in the form of a cup (28), and that the radial oscillator (16) is arranged at the bottom of the cup (28).

**3.** Ultrasonic transducer according to Claim 2, **characterised in that** the cup (28) is filled with the damping element (36).

**4.** Ultrasonic transducer according to Claim 2 or 3, **characterised in that** the cup (28) is provided with a flattening (30) in the region of its bottom.

**5.** Ultrasonic transducer according to one of the Claims 1 to 4, **characterised in that** a third matching layer (34) is arranged on the second matching layer (32).

**6.** Ultrasonic transducer according to one of the Claims 1 to 5, **characterised in that**

$$\lambda/8 \leqq d_A < \lambda/4$$

is selected for the thickness $d_A$ of the first matching layer (26) and that

$$\lambda/8 \leqq d_B < \lambda/4$$

is selected for the thickness $d_B$ of the second matching layer (32), where $\lambda$ is the wavelength of the thickness-mode oscillation.

**7.** Ultrasonic transducer according to Claim 6, **characterised in that** $d_A + d_B \approx \lambda/4$ applies for the thickness $d_A$ and $d_B$ of the first and second matching layer (26, 32), respectively.

**8.** Ultrasonic transducer according to Claim 6 or 7, **characterised in that** $d_A + d_B + d_K \approx \lambda/2$ applies for the thickness $d_A$ and $d_B$ of the first and second matching layer (26, 32), respectively, and for the thickness $d_K$ of the radial oscillator (16).

**9.** Ultrasonic transducer according to one of the Claims 1 to 8, **characterised in that** a layer of glass microheads in epoxy resin is provided as the first matching layer (26).

**10.** Ultrasonic transducer according to one of the Claims 1 to 9, **characterised in that** an open-cell foam is provided as the second matching layer (32).

**11.** Ultrasonic transducer according to one of the Claims 1 to 10, **characterised in that** to apply the spike voltage (U(t)) to the electrodes (18, 20), an electrical excitation circuit (40) is provided, that contains a capacitor (44) which discharges onto the electrodes (18, 20) on power-up.

12. Ultrasonic transducer according to one of the Claims 1 to 11, **characterised in that** an evaluation circuit is provided, that evaluates at most the first three half-cycles (1, 2, 3) of each ultrasonic pulse (I(t)) triggered on excitation, after said pulse has passed through the gas (14).

13. Ultrasonic transducer according to one of the Claims 1 to 12, **characterised in that** said ultrasonic transducer is designed for a frequency of approximately 200 kHz.

## Revendications

1. Transducteur ultrasonore de mesure de propagation d'impulsions ultrasonores dans un gaz, notamment pour un appareil de mesure de débit de gaz, caractérisé par
   a) un oscillateur radial piézoélectrique (16) constitué de préférence d'une matière piézocéramique, et pourvu sur les deux côtés d'électrodes (18, 20) auxquelles peut être appliquée une tension en forme d'impulsions en aiguilles (U(t)),
   b) une première couche d'adaptation (26) disposée sur un des côtés de l'oscillateur radial (16) et dont l'épaisseur ($d_A$) est plus petite qu'un quart d'une longueur d'ondes ( $\lambda$ ) propre au transducteur,
   c) une seconde couche d'adaptation (32) disposée sur la première couche d'adaptation (26) et dont l'épaisseur ($d_B$) est également plus petite qu'un quart de la longueur d'ondes ( $\lambda$ ) propre au transducteur,
   d) un corps d'amortissement (36) disposé sur l'autre côté de l'oscillateur radial (16) et
   e) une génération d'une oscillation en épaisseurs par l'ensemble composé se composant de l'oscillateur radial (16) et des deux couches d'adaptation (26, 32) par suite d'un couplage radial d'épaisseur, aussitôt que la tension en forme d'aiguilles (U(t)) est appliquée, la longueur d'ondes ( $\lambda$ ) propre au transducteur précitée étant la longueur d'ondes produite sous l'effet d'une résonance propre lors de l'oscillation en épaisseur.

2. Transducteur ultrasonore selon la revendication 1, caractérisé en ce que la première couche d'adaptation (26) est agencée en forme de pot (28) et en ce que l'oscillateur radial (16) est disposé sur le fond du pot (28).

3. Transducteur ultrasonore selon la revendication 2, caractérisé en ce que le pot (28) est rempli avec le corps d'amortissement (36).

4. Transducteur ultrasonore selon la revendication 2 ou 3, caractérisé en ce que le pot (28) est pourvu d'une zone plate (30) dans une partie de son fond.

5. Transducteur ultrasonore selon une des revendications 1 à 4, caractérisé en ce que sur la seconde couche d'adaptation (32) est disposée une troisième couche d'adaptation (34).

6. Transducteur ultrasonore selon une des revendications 1 à 5, caractérisé en ce que pour l'épaisseur $d_A$ de la première couche d'adaptation (26) est choisie la formule :

   $$\lambda/8 \leq d_A < \lambda/4$$

   et en ce que pour l'épaisseur $d_B$ de la seconde couche d'adaptation (32) est choisie la formule :

   $$\lambda/8 \leq d_B < \lambda/4$$

   où $\lambda$ représente la longueur d'ondes de l'oscillation en épaisseur.

7. Transducteur ultrasonore selon la revendication 6, caractérisé en ce que, pour les épaisseurs $d_A$ et $d_B$ de la première et de la seconde couche d'adaptation (26, 32), on a la formule

   $$d_A + d_B \cong \lambda/4$$

8. Transducteur ultrasonore selon la revendication 6 ou 7, caractérisé en ce que pour les épaisseurs $d_A$ et $d_B$ de la première et de la seconde couche d'adaptation (26, 32) ainsi que pour l'épaisseur $d_K$ de l'oscillateur radial (16), on a la formule :

   $$d_A + d_B + d_K \cong \lambda/2$$

9. Transducteur ultrasonore selon une des revendications 1 à 8, caractérisé en ce que, comme première couche d'adaptation (26), il est prévu une couche de microbilles en verre dans de la résine époxyde.

10. Transducteur ultrasonore selon une des revendications 1 à 9, caractérisé en ce que, comme seconde couche d'adaptation (32), il est prévu une mousse à pores ouverts.

11. Transducteur ultrasonore selon une des revendications 1 à 10, caractérisé en ce que, pour une application de la tension en forme d'impulsions en aiguilles (U(t)) aux électrodes (18, 20), il est prévu un circuit électrique d'excitation (40) qui contient un condensateur (44) qui, lors de l'enclenchement, se décharge dans les électrodes (18, 20).

12. Transducteur ultrasonore selon une des revendications 1 à 11, caractérisé en ce qu'il est prévu un circuit d'évaluation qui évalue au maximum les trois premières demi-ondes (1, 2, 3) de chacune des impulsions ultrasonores (I-(t)) déclenchées lors de l'excitation après son passage à travers le gaz (14).

13. Transducteur ultrasonore selon une des revendications 1 à 12, caractérisé en ce qu'il est conçu pour une fréquence d'environ 200 kHz.